# EUROPEAN PATENT APPLICATION

(11) **EP 2 674 336 A1**
(43) Date of publication of application: **18.12.2013**
(21) Application number: 12460031.3
(22) Date of filing: 11.06.2012
(51) Int. Cl.: B60T 7/20, B60T 11/10, F16D 55/2265

(54) **Overrun disk brake**

(71) Applicant: "DEBON" Spólka z o.o, 64-120 Krzemieniewo (PL); Gotter, Zbigniew, 63-740 Kobylin (PL)
(72) Inventor: Gotter, Zbigniew, 63-740 Kobylin (PL)

(57) **Abstract**

An overrunning disk brake, according to the invention having a body and brake blocks pressed against a brake disk by means of a pressure unit placed slidably in a chamber joined hydraulicly with a brake assembly, characterised in that, a brake block (2) situated from the inner side of the brake disk (4) is provided with a pin (5) protruding above a surface of the brake block (2), and at one side of the pin (5) there is a spring (7) placed basically parallel to a surface of the brake block (2), whereas the pressure unit (8) is made of an inner piston (10) placed slidably in an outer piston (11), and the inner piston (10) comprises a pin (12) on which there is a return spring (14).

In the outer piston (11) there is a recess (15) situated from side of the brake block (2).

Advantageously frontal surface (6) of the pin (5) of the brake block (2) and frontal surface (13) of the pin (12) of the inner piston (10) are sloping, moreover slope of the frontal surface (6) of the pin (5) of the brake block (2) complies with slope of the frontal surface (13) of the pin (12) of the inner piston (10).

Pistons (10), 11)) are situated in the pressure unit (8) in such a way that during braking, the outer piston (11) and inner piston (10) move together, however, when wheels of a trailer rotate towards opposite direction than during driving forwards, the inner piston (10) advances the outer piston (11) with such a quantity, so that capcity of the chamber (9) under two pistons be larger than delivery of a brake pump.

## Description

This invention relates to an overrunning disk brake for trailers braked overrunningly.

There are known overrunning disk brakes used in vehicles. For example in the description of the invention WO03/067113 a disk brake is presented, which has a brake calliper for the brake disk. The brake disk is joined with the wheel of a vehicle.Said brake calliper has a housing with a bore in which pistons arrangement is located. These pistons, by means of mechanical or electromechanical drive are shifted parallely to the axle of the brake disk causing pressure of brake blocks to the brake disk. The brake blocks are located in the brake calliper at two sides of the brake disk. Between pistons there is a pressure chamber joined to hydraulic circuit of the brake unit.

Known disk brakes are used for service brakes and parking brakes and emergency brakes in automotive vehicles.But they are not used as brakes for trailers braked overrunningly.

The disadvantage of the known overrunning brakes is their developed construction. In the housing there are many mechanisms which mate with a brake cable. Moreover, in spite of existing constructional changes there are still disadvantages during changing of brake blocks and elimination of clearances between blocks and a disk resulting from abrasion of blocks.

In order to eliminate these inconveniences an overrunning hydraulic disk brake was prepared to ensure automatic regulation of clearances and ease for access to brake blocks.

An overrunning disk brake, according to the invention having a body and brake blocks pressed against a brake disk by means of a pressure unit placed slidably in a chamber joined hydraulicly with a brake assembly **characterised in that**, a brake block situated from the inner side of the brake disk is provided with a pin protruding above a surface of the brake block, and at one side of the pin there is a spring placed basically parallel to a surface of the brake block, whereas the pressure unit is made of an inner piston placed slidably in an outer piston, and the inner piston comprises a pin on which there is a return spring.

In the outer piston there is a recess situated from side of the brake block.

Advantageously frontal surface of the pin of the brake block and frontal surface of the pin of the inner piston are sloping, moreover slope of the frontal surface of the pin of the brake block complies with slope of the frontal surface of the pin of the inner piston.

Pistons are situated in the pressure unit in such a way that during braking, the outer piston and inner piston move together, however, when wheels of a trailer rotate towards opposite direction than during driving forwards, the inner piston advances the outer piston with such a quantity, so that capcity of the chamber under two pistons be larger than delivery of a brake pump.

The brake, according to the invention, has got compact construction and small overall dimensions.Its construction ensures automatic removal of clearances between brake blocks and a disk.

The brake is used for trailers of different types braked overrunningly.Thanks to its construction it ensures efficiency working while driving forward and while parking and automatic releasing of the brake while backing a vehicle with a trailer.

Moreover, construction of the brake ensures ease of exchange of worn out brake blocks and a brake disk. The brake is characterised by increased force of braking.

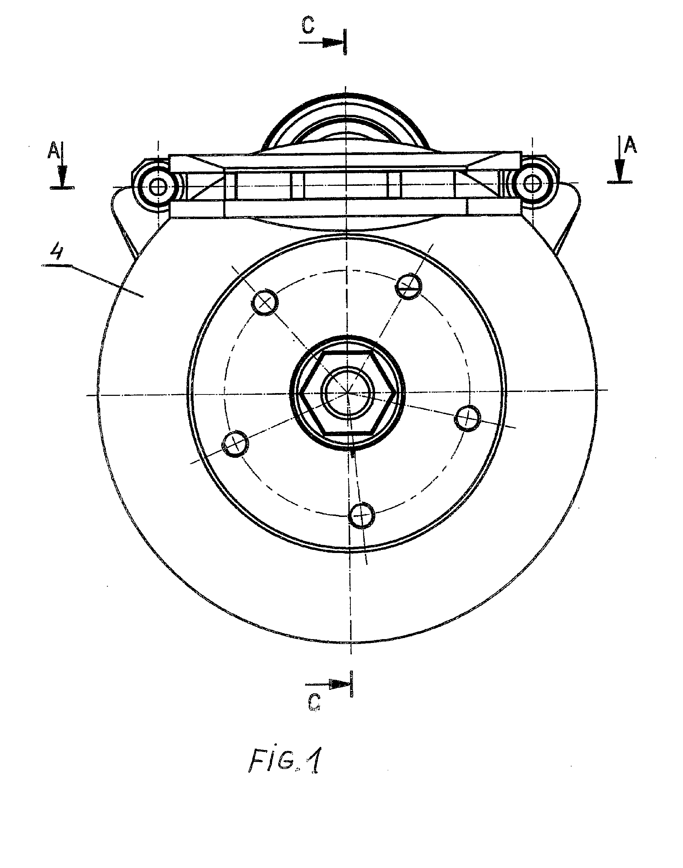

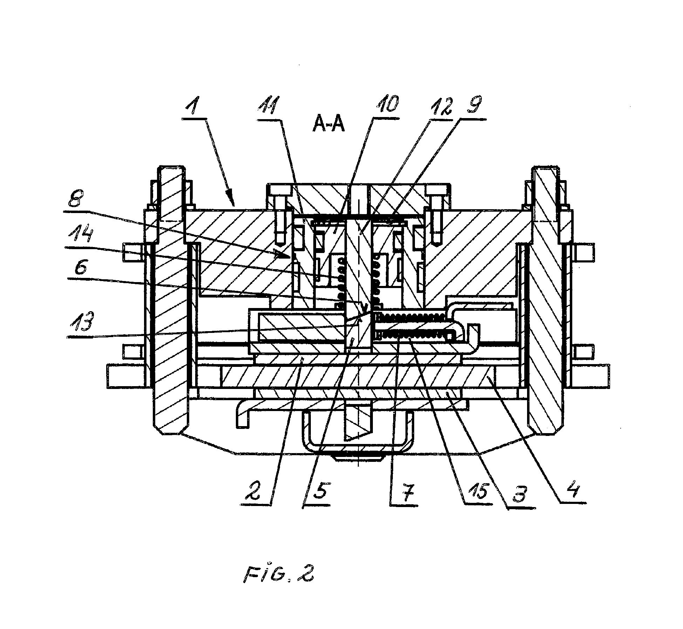

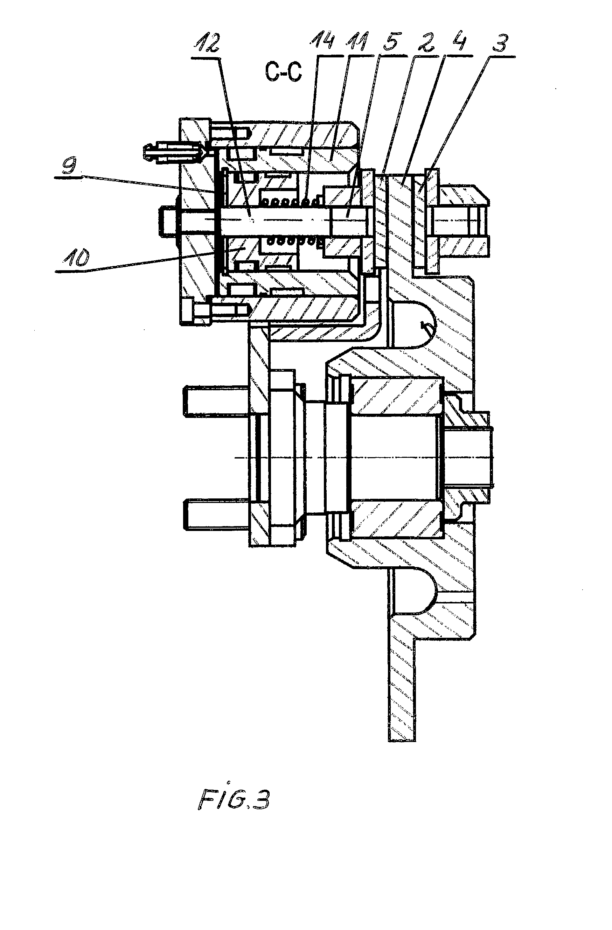

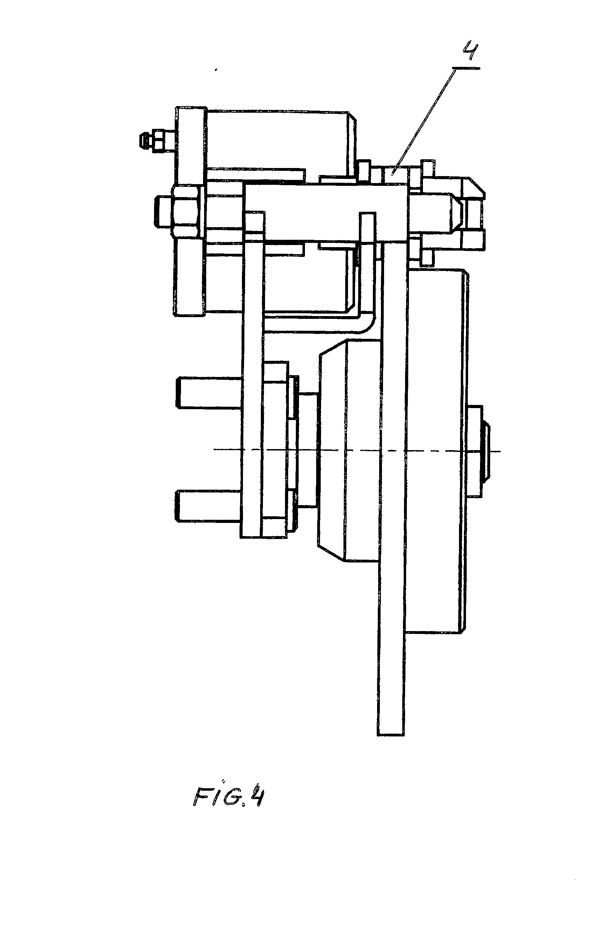

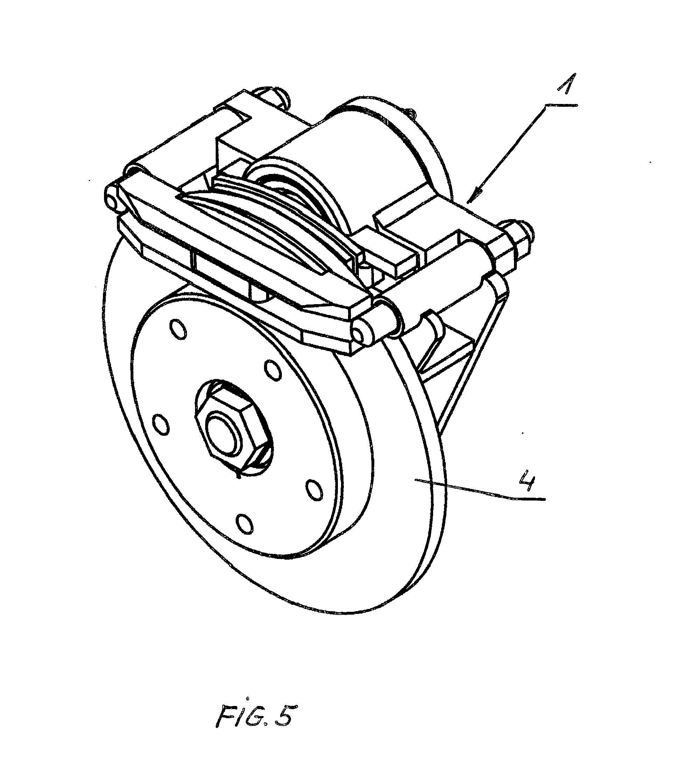

An object of the invention is shown by the example of the drawing on which FIG.1 represents the brake in frontal view, FIG.2 - the brake in section A-A, FIG.3 - the brake in section C-C, FIG.4 - the brake in side view, FIG.5 - the brake in perspective view.

The overrunning disk brake, according to the invention is made of a body 1 and brake blocks 2, 3 pressed against a brake disk 4. The brake block 2 is situated from inner side of the brake disk 4, but the brake block 3 is situated from outer side of the brake disk 4. The brake block 2, situated from inner side of brake disc 4, is eqipped with a pin 5 protruding above the surface of the brake block 2. Frontal surface 6 of the pin 5 is advantageously sloping.

At one side of the pin 5 there is a spring placed basically parallel to the surface of the brake block 2.

The brake block 2 is pressed against the brake disk 4 by means of a pressure unit 8 placed slidably in a chamber 9 of a body 1. The chamber 9 is joined hydraulically with brake assembly equipped with a brake pump. The pressure unit 8 is made of an inner piston 10 placed slidably in an outer piston 11.The inner piston 10 has a pin 12 , which frontal surface 13, from side of the pin 5 of the brake block 2 is sloping advantageously. Slope of the frontal surface 6 of the pin 5 of the brake block 2 complies with slope of the frontal surface 13 of the pin 12 of the inner piston 10. During drive forwards and during braking while drive forwards the frontal surface 6 of the pin 5 of the brake block 2 adheres the frontal surface 13 of the pin 12 of the inner piston 10.

On the pin 12 of the inner piston 10 there is a return spring 14 situated in the seat of the outer piston 11.

In the outer piston 11 there is a recess 15 situated from side of the brake block 2, enabling shift of the pin 5 with the brake block 2 along the surface of the brake disk 4.

During drive forwards, during braking the pressure unit 8 presses the brake block 2 causing braking of a trailer. During braking the outer piston 11 and the inner piston 10 move together.

During drive backwards, wheels of a trailer rotate towards opposite direction than in drive forwards. As a result of friction of the brake block 2 against the brake disk 4 there is a shift of the brake block 2 along the surface of the brake disk 4. The braking block 2, while shifting, compresses the spring 7 with its pin 5 , making the same place for the pin 12 of the inner piston 10. The inner piston 10 , shifting towards the brake disk 4 advances the outer piston 11 with such a quantity so that capacity of the chamber 9 under two pistons 10, 11 be larger from than delivery of a brake pump, which causes brake release.

After release of the brake, the inner piston 10 , as a result of action of the return spring 14 , retracts and with this it causes return of brake fluid to a brake pump, enabling, as a result of action of the spring 7, return of the brake block 2 to exit position.

## Claims

1. An overrunning disk brake, having a body and brake blocks pressed against a brake disk by means of a pressure unit placed slidably in a chamber joined hydraulicly with a brake assembly , **characterised in that**, a brake block (2) situated from the inner side of the brake disk (4) is provided with a pin (5) protruding above a surface of the brake block (2), and at one side of the pin (5) there is a spring (7) placed basically parallel to a surface of the brake block (2), whereas the pressure unit (8) is made of an inner piston (10) placed slidably in an outer piston (11), and the inner piston (10) comprises a pin (12) on which there is a return spring (14).

2. An overrunning disk brake , according to claim 1, **characterised in that**, in the outer piston (11) there is a recess (15) situated from side of the brake block (2).

3. An overrunning disk brake, according to claim 1, **characterised in that**, advantageously frontal surface (6) of the pin (5) of the brake block (2) and frontal surface (13) of the pin (12) of the inner piston (10) are sloping, moreover slope of the frontal surface (6) of the pin (5) of the brake block (2) complies with slope of the frontal surface (13) of the pin (12) of the inner piston (10).

4. An overrunning disk brake, according to claim 1, **characterised in that**, pistons (10, 11)) are situated in the pressure unit (8) in such a way that during braking, the outer piston (11) and inner piston (10) move together, however, when wheels of a trailer rotate towards opposite direction than during drive forwards, the inner piston (10) advances the outer piston (11) with such a quantity, so that capcity of the chamber (9) under two pistons be larger than delivery of a brake pump.
